# EUROPÄISCHE PATENTSCHRIFT

(11) **EP 1 771 706 B1**
(45) Veröffentlichungstag und Bekanntmachung des Hinweises auf die Patenterteilung: **29.05.2013**
(21) Anmeldenummer: 05756834.7
(22) Anmeldetag: 05.07.2005
(51) Int. Cl.: G01F 23/296

(54) **VORRICHTUNG ZUR BESTIMMUNG UND/ODER ÜBERWACHUNG MINDESTENS EINER PROZESSGRÖSSE**
DEVICE FOR DETERMINING AND/OR MONITORING AT LEAST ONE PROCESS VARIABLE
DISPOSITIF POUR DETERMINER ET/OU CONTROLER AU MOINS UN PARAMETRE DE PROCEDE

(30) Priorität: 23.07.2004 DE 102004036018
(43) Veröffentlichungstag der Anmeldung: 11.04.2007
(73) Patentinhaber: Endress u. Hauser GmbH u.Co. KG, 79689 Maulburg (DE)
(72) Erfinder: PFEIFFER, Helmut, 79585 Steinen (DE)
(74) Vertreter: Andres, Angelika Maria
(86) Internationale Anmeldenummer: PCT/EP2005/053199
(87) Internationale Veröffentlichungsnummer: WO 2006/010696

(56) Entgegenhaltungen:
- EP-A- 0 950 879
- DE-A1- 10 243 430
- US-B1- 6 205 855

## Beschreibung

Die Erfindung bezieht sich auf eine Vorrichtung zur Bestimmung und/oder Überwachung mindestens einer Prozessgröße eines Mediums, mit einer mechanisch schwingfähigen Einheit, welche in mindestens einer Richtung mechanische Schwingungen ausführt, und welche an einer Einspannung befestigt ist, mit einer Anrege-/Empfangseinheit, welche die mechanisch schwingfähige Einheit zu mechanischen Schwingungen anregt, und welche die mechanischen Schwingungen der mechanisch schwingfähigen Einheit empfängt, und mit einer Regel-/Auswerteeinheit, welche die mechanischen Schwingungen der mechanisch schwingfähigen Einheit regelt, und welche mit den mechanischen Schwingungen der mechanisch schwingfähigen Einheit die Prozessgröße bestimmt und/oder überwacht. Bei der Prozessgröße handelt es sich beispielsweise um den Füllstand oder bei Flüssigkeiten als Medium auch z.B. um die Dichte oder die Viskosität. Andere Prozessgrößen sind jedoch ebenfalls möglich.

Eine solche Vorrichtung lässt sich beispielsweise der Patentschrift DE 39 31 453 C1 der Anmelderin entnehmen. Das Prinzip der Messung des Füllstands mit solchen Messgeräten besteht darin, dass die Schwingungen der mechanisch schwingfähigen Einheit - z.B. einer Schwinggabel - davon abhängt, ob die Einheit vom Medium bedeckt wird oder nicht. Bei Bedeckung nimmt z.B. die Amplitude ab. Somit kann umgekehrt, wenn die Amplitude zunimmt, geschlussfolgert werden, dass das Medium den Füllstand, der durch die Abmessungen des Sensors und der Einbauposition bedingt ist, unterschritten hat. Gleichzeitig lassen sich im Falle der Bedeckung jedoch auch die Dichte und die Viskosität des Mediums bestimmen. Dafür ist es z.B. erforderlich, neben Amplitude und Frequenz auch die Phase zwischen dem Anregesignal und dem empfangenen (Antwort-)Signal auszuwerten.

Die mechanisch schwingfähigen Einheiten sind üblicherweise so konstruiert, dass möglichst keine Reaktionskräfte und -momente auf den Bereich der Einspannung - meist handelt es sich um eine Membran - der mechanisch schwingfähigen Einheit am Messgerät auftreten. Dies lässt sich beispielsweise bei obiger Schwinggabel dadurch bewerkstelligen, dass beide Schwingstäbe gleiche Massenträgheitsmomente und Steifigkeiten aufweisen, speziell sollten also beide Zinken gleich und möglichst symmetrisch auf der Membran befestigt sein. Schwingen beide Zinken gegensinnig zueinander, so kompensieren sich gerade die Kräfte und Momente und es wirken keine Reaktionskräfte und -momente auf die Einspannung bzw. auf die Membran. Damit wird auch verhindert, dass Schwingungsenergie über die Einspannung verloren geht. Problematisch ist jedoch der Fall, wenn die Schwingstäbe nicht senkrecht auf der Einspannung stehen, sondern leicht auseinander- oder zueinander geneigt sind. Die Schwinggabel wird also quasi aufgeweitet oder zusammengedrückt. In diesem Fall treten axiale Kräfte parallel zur Symmetrieachse der Zinken auf. Da diese Kräfte gleichgerichtet sind, kompensieren sie sich nicht, sondern wirken auf die Einspannung, und sind somit mit der Umgebung gekoppelt, was zu Energieverlust führen kann.

Daher besteht die Aufgabe der Erfindung darin, eine Messvorrichtung anzugeben, auf deren Einspannung durch die mechanisch schwingfähige Einheit möglichst keine Reaktionskräfte ausgeübt werden.

Die Aufgabe löst die Erfindung dadurch, dass mindestens eine Kompensationsmasse vorgesehen ist, welche mit der mechanisch schwingfähigen Einheit mechanisch gekoppelt ist, und welche derartig ausgestaltet und/oder befestigt ist, dass sie mindestens mechanische Schwingungen in einer Richtung ausführt, wobei die Richtung der Schwingungen der Kompensationsmasse im Wesentlichen senkrecht auf der Richtung der Schwingungen der mechanisch schwingfähigen Einheit steht. Die Idee der Erfindung ist also, dass die in der Richtung senkrecht zur Schwingungsrichtung der mechanisch schwingfähigen Einheit wirkenden Reaktionskräfte durch eine in dieser Richtung schwingende Kompensationsmasse ausgeglichen werden. Der mechanisch schwingfähigen Einheit gegenüber schwingt also die Kompensationsmasse, deren gegenphasige Schwingungen die wirkenden Reaktionskräfte gerade kompensiert. Die Kräfte werden durch die Erfindung also kompensiert, wodurch die Energie in der klassischen Betrachtung im System erhalten bleibt. Dies ist deutlich davon zu unterscheiden, dass die Kräfte durch Dissipation z.B. in Wärme umgesetzt werden, wodurch dem System Energie verloren geht. Schwingen also bei der Schwinggabel zwei Schwingstäbe gegensinnig, so dass keine radialen Reaktionskräfte und -momente auftreten, so wird diese Kompensation in der Erfindung dadurch geleistet, dass die mechanisch schwingfähige Einheit und die Kompensationsmasse ein Schwingungspaar bilden, deren gegenphasige Schwingungen dazu führen, dass keine axialen Reaktionskräfte auftreten.

Eine Ausgestaltung sieht vor, dass die mechanisch schwingfähige Einheit derartig ausgestaltet und/oder befestigt ist, dass sie mechanische Schwingungen im Wesentlichen senkrecht zu einer ihrer Längsachsen ausführt, und dass die Kompensationsmasse derartig ausgestaltet und/oder befestigt ist, dass sie mindestens axiale Schwingungen parallel zur Längsachse der mechanisch schwingfähigen Einheit ausführt. Hierbei handelt es sich also um den Sonderfall, dass die mechanisch schwingfähige Einheit transversale oder Biegeschwingungen ausführt. Sind in diesem Fall die Schwingstäbe oder Gabelzinken gegen ihre Längs- oder Symmetrieachse geneigt, so wirken zusätzliche axiale Kraftkomponenten auf die Membran, welche durch entsprechende gegenphasige Schwingungen der Kompensationsmasse ausgeglichen werden.

Eine Ausgestaltung beinhaltet, dass die Kompensationsmasse derartig ausgestaltet und/oder befestigt ist, dass von der mechanisch schwingfähigen Einheit auf die Einspannung wirkende Reaktionskräfte kompensiert werden. Die Kompensationsmasse und Steifigkeit der Aufhängung muss also auf die Ausgestaltung der Vorrichtung abgestimmt werden, so dass eine optimale Kompensation möglich ist.

Eine Ausgestaltung sieht vor, dass die mechanisch schwingfähige Einheit an mindestens einer Membran befestigt ist. Bei der Einspannung handelt es sich in diesem Fall also um eine Membran. Über eine solche Membran wird üblicherweise die Anregung der mechanisch schwingfähigen Einheit zu Schwingungen bzw. der Empfang dieser Schwingungen realisiert. Die Membran selbst wiederum ist Teil eines Gehäuse befestigt, mit welchem das Messgerät beispielsweise passend an einer Behälterwand o.ä. befestigt wird.

Eine Ausgestaltung beinhaltet, dass die Anrege-/Empfangseinheit an der Membran befestigt ist. Vorzugsweise ist die Anrege-/Empfangseinheit an der gegenüberliegenden Seite der Membran angebracht, so dass es zu einer optimalen Schwingungs-übertragung zwischen der mechanisch schwingfähigen Einheit und der Anrege-/Empfangseinheit kommen kann.

Eine Ausgestaltung sieht vor, dass mindestens ein Gehäuse vorgesehen ist, dass die mechanisch schwingfähige Einheit mit dem Gehäuse verbunden ist, und dass die Kompensationsmasse mit dem Gehäuse verbunden ist. Unter Verbindung sei hier auch die mechanische Kopplung verstanden. Üblicherweise weist die Messvorrichtung ein becherförmiges Gehäuse auf, welches in Richtung Prozess von der Membran begrenzt ist. An der Membran befinden sich dann die mechanisch schwingfähige Einheit und die Anrege-/Empfangseinheit. Über dieses Gehäuse lässt es sich jedoch auch bewerkstelligen, dass die axiale Schwingungsenergie für die Kompensationsmasse übertragen wird. Dafür sind die Federelemente der folgenden Ausgestaltung wichtig.

Eine Ausgestaltung beinhaltet, dass die Kompensationsmasse über mindestens ein Federelement mit der mechanisch schwingfähigen Einheit mechanisch gekoppelt ist. Ein solches Federelement ermöglicht es, dass die Energie-/Kraftübertragung bewerkstelligt wird, wobei die Ausgestaltung der Kompensationsmasse so ausgeführt wird, dass auf die besonderen Bedürfnisse der Messvorrichtung eingegangen werden kann. Die Besonderheit dieser Kompensationsmasse besteht, insoweit sie auch innerhalb des Gehäuses der Vorrichtung angebracht wird, darin, dass nur sehr wenig Raum vorhanden ist. Aufgrund der Anrege-/Empfangseinheit ist der Platz eingeschränkt. Weiterhin ist es ggf. auch erforderlich, dass wenigstens Teile der Vorrichtung vergossen werden, so dass es auch hierdurch zu einer Platzverminderung kommt. Über ein passendes Federelement ist es nun möglich, die Energie zu übertragen, auch dann, wenn die Kompensationsmasse nicht direkten Kontakt z.B. mit dem Gehäuse haben kann.

Eine Ausgestaltung beinhaltet, dass die Anrege-/Empfangseinheit mindestens ein piezoelektrisches Element aufweist. Solche piezoelektrischen Elemente oder Piezowandler wandeln elektrische Wechselspannungen in mechanische Schwingungen und umgekehrt mechanische Schwingungen in elektrische Wechselspannungen. Durch diese Elemente ist also die Übertragung von mechanischen Schwingungen in elektronisch auswertbare Signale und umgekehrt leicht zu realisieren.

Eine Ausgestaltung sieht vor, dass die Anrege-/Empfangseinheit im Wesentlichen zylinderförmig ausgebildet ist. Dabei handelt es sich meist um Stapel von piezoelektrischen Elementen. Solche Stapel sind in den meisten Fällen zentral auf der Innenseite der Membran angebracht.

Eine Ausgestaltung beinhaltet, dass die Kompensationsmasse mindestens eine Innenaussparung aufweist, welche die Anrege-/Empfangseinheit umgibt. Somit liegt also die Kompensationsmasse um die Anrege-/Empfangseinheit und füllt den Raum um sie herum. Für diese Ausgestaltung ist auch das obige Federelement sehr hilfreich. Weiterhin wird mit dieser Ausgestaltung dem Platzmangel entsprochen.

Eine Ausgestaltung sieht vor, dass es sich bei der mechanisch schwingfähigen Einheit um eine Schwinggabel mit zwei voneinander beabstandeten Schwingstäben handelt. Bei solchen Schwinggabeln können durch das Medium die Schwingstäbe verbogen werden, so dass die eigentliche Symmetrie aufgehoben wird und es zu axial wirkenden Reaktionskräften in der Einspannung kommt. Somit ist also insbesondere bei solche Gabeln die Erfindung sehr wichtig.

Eine Ausgestaltung beinhaltet, dass es sich bei der Prozessgröße um den Füllstand, die Dichte oder die Viskosität des Mediums handelt. Diese Prozessgrößen wurden bereits in der Einleitung diskutiert.

Die Erfindung wird anhand der nachfolgenden Zeichnungen näher erläutert. Es zeigt:

Fig. 1: die bei einer Schwinggabel auf die Einspannung wirkenden Kräfte und Momente,

Fig. 2a: eine schematische Darstellung eines Schwingstabes mit der Kompensationsmasse,

Fig. 2b: ein physikalisches Ersatzsystem für den Schwingstab und die Kompensationsmasse,

Fig. 3: ein Teil einer perspektivischen Ausbildung der erfindungsgemäßen Kompensationsmasse,

Fig. 4: eine zusätzliche Ausgestaltung der erfindungsgemäßen Kompensationsmasse, und

Fig. 5: eine weitere Ausgestaltung der erfindungsgemäßen Kompensationsmasse.

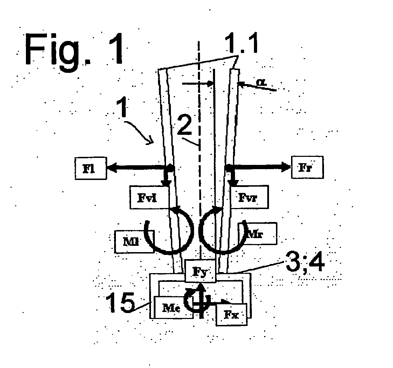

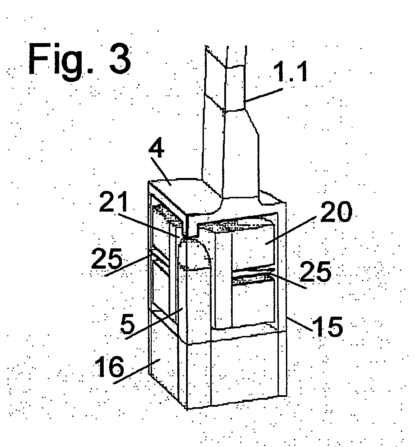

Fig. 1 zeigt die von der mechanisch schwingfähigen Einheit 1 auf die Einspannung 3 wirkenden Kräfte. Die mechanisch schwingfähige Einheit 1 ist hier an einer Membran 4 befestigt und wird von einer Anrege-/Empfangseinheit 5 - siehe Fig. 3 - zu mechanischen (transversalen oder Biege-)Schwingungen angeregt. Die mechanisch schwingfähige Einheit 1 besteht aus zwei Schwingstäben 1.1, die symmetrisch auf der Membran 4 fixiert und gegenüber der Längs- oder Symmetrieachse 2 in entgegengesetzter Richtung leicht geneigt sind. Die schwingfähige Einheit 1 ist also aufgeweitet. Beide Stäbe 1.1 schwingen gegenphasig zueinander. Die dadurch verursachten Massenkräfte Fr, Fl sowie Fvr und Fvl wirken in radialer Richtung entgegengesetzt, und in axialer Richtung gleichsinnig.

Bildet man die Summe der Kräfte in radialer Richtung, berechnet man also die Reaktionskraft Fx in der Membranebene, so erhält man als verbleibende Reaktionskraft Null: -Fl + Fr = Fx = 0. In axialer Richtung erhält man die Summe beider Beschleunigungskomponenten, die als Reaktion von der Einspannung 3 aufgenommen werden: Fy = Fvr + Fvl.

Die Drehmomente Ml und Mr des linken und des rechten Schwingstabs 1.1 kompensieren sich gegenseitig, so dass Me = 0 ist.

Die Kräftebilanz zeigt also, dass die in der Einspannung 3 auftretende Reaktionskraft Fx gleich Null ist, da die Summe der beiden Kräfte Fr und Fl gleich Null ist. Die axiale Reaktionskraft Fy in der Einspannung 3 als die Summe der beiden axialen Kräfte Fvr und Fvl ist jedoch ungleich Null, weil beide Kräfte gleichsinnig wirken. Die Reaktionskraft Fy ist abhängig von der Winkellage a der beiden Schwingstäbe 1.1. Für den Fall a = 0, d.h. in dem Fall, dass beide Schwingstäbe 1.1 senkrecht auf der Membran 4 angeordnet sind, ist die Reaktionskraft Fy ebenfalls Null, da die einzelnen Kraftkomponenten Null sind.

Für ein ideal entkoppeltes Schwingungssystem gilt Fx = Fy = 0 und Mx = My = 0, damit keine Schwingungsenergie verloren geht. Diese Betrachtung setzt dabei voraus, dass die Schwingungsamplituden genügend klein sind.

Da die Winkelstellung der Schwingstäbe 1.1 zueinander aus anwendungstechnischen Gründen von Bedeutung ist (eine Aufweitung ist z.B. sinnvoll, um das Verklemmen von Material zwischen den Schwingstäben zu vermeiden), muss man entweder die Überkopplung auf das Einschraubstück 3 akzeptieren oder sie mit Hilfe einer zusätzlichen Maßnahme im Schwingungssystem kompensieren. Eine reine Dissipation wäre auch möglich, wird jedoch hier nicht angestrebt. Reine Steifigkeitsänderungen in der Membran 4 haben keinen Einfluss auf die Entkopplung eines solchen Schwingungssystems.

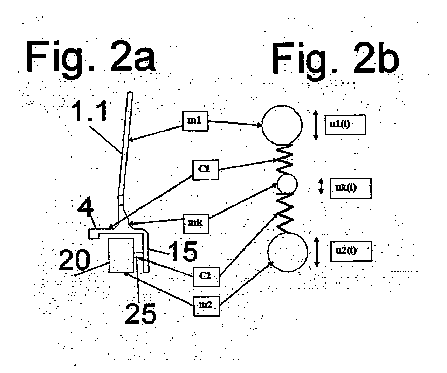

Fig. 2a zeigt eine Hälfte der Messvorrichtung. Zu sehen sind ein Schwingstab 1.1, der an der Membran 4 befestigt ist. Die Membran 4 ist Teil des Gehäuses 15. In dem Gehäuse 15 ist über das Federelement 25 die Kompensationsmasse 20 angebracht. Der Schwingstab 1.1 ist leicht geneigt, so dass dieser Stab 1.1 und der entsprechende zweite Stab - hier nicht dargestellt - zusammen eine axiale Kraft auf die Membran 4 ausüben. Diese Reaktionskraft wird durch die Kompensationsmasse 20 kompensiert, die gegenphasig zur mechanisch schwingfähigen Einheit 1 in axialer Richtung schwingt und somit die Reaktionskraft auf die Membran 4 aufnimmt und kompensiert.

In der Fig. 2b ist ein korrespondierendes Modell zur Ausgestaltung in Fig. 2a dargestellt. Dieses halbe Schwingungssystem besteht aus den folgenden Massen: m1 (für den Schwingstab 1.1), m2 (für die Kompensationsmasse 20) und mk (für die Masse der Membran 4 bzw. der Einspannung 3 und dem Gehäuse 15) und den Federn mit den folgenden Federsteifigkeiten: c1 (für die Schwingungskopplung zwischen Schwingstab 1.1 und der Membran 4) und c2 (für die Kopplung zwischen Gehäuse 15 als Verlängerung der Membran 4 und der Kompensationsmasse 20 durch das Federelement 25).

Die Aufgabe des zusätzlich im Gehäuse 15 untergebrachten Federelements 25 mit der Steifigkeit c2 und der Kompensationsmasse 20 mit der Masse m2 ist, bei richtiger Abstimmung mit der Feder c1 und der Masse m1 die Bewegung uk(t) der Masse mk (Membran 4) zu Null zu bringen. Von daher ist also eine entsprechend Abstimmung erforderlich.

Fig. 3 zeigt eine konkrete Umsetzung der in Fig. 2a gezeigten Ausgestaltung. Zu sehen ist hier die Anrege-/Empfangseinheit 5, die hier im Wesentlichen zylinderförmig ist. Dabei handelt es sich beispielhaft um einen Stapel von piezoelektrischen Elementen, die mit einer elektrischen Wechselspannung zu mechanischen Schwingungen angeregt werden. Diese Schwingungen werden über die Membran 4 auf die mechanisch schwingfähige Einheit 1 -hier ist einer der beiden Schwingstäbe 1.1 dargestellt - übertragen. Dabei handelt es sich um Biegeschwingungen oder transversale Schwingungen, also Schwingungen parallel zur Membran 4 bzw. senkrecht zur Symmetrieachse 2 der mechanisch schwingfähigen Einheit 1 bzw. senkrecht zur Längsachse des Schwingstabes 1.1. Umgekehrt wandelt die Anrege-/Empfangseinheit 5 die mechanischen Schwingungen der mechanisch schwingfähigen Einheit 1 in eine elektrische Wechselspannung um, aus der dann entsprechend auf die zu bestimmende oder zu überwachende Prozessgröße - bei dem hier gezeigten System handelt es sich primär um Füllstand, Dichte oder Viskosität, andere Größen sind jedoch auch möglich - geschlossen werden kann. Die Anrege-/Empfangseinheit 5 ist auf der starren Abstützung 16 angebracht, die derartig ausgestaltet ist, dass die Energie der Anrege-/Empfangseinheit 5 möglichst vollständig auf die Membran 4 übertragen wird. Die Membran 4 ist mit dem Gehäuse 15 der Vorrichtung verbunden. In dem Gehäuse 15 befindet sich die Kompensationsmasse 20, die über ein Federelement 25 mit dem Gehäuse 15 und somit mit der Membran 4 verbunden ist. Bei dem Federelement 25 handelt es sich beispielsweise um mehrere Blattfedern, die fest mit der Kompensationsmasse 20 verbunden und die z.B. mit dem Gehäuse 15 verschweißt sind. Es kann sich jedoch auch um eine große Blattfeder handeln. Wie zu sehen, weist die Kompensationsmasse 20 eine Innenaussparung 21 auf, die die Anrege-/Empfangseinheit 5 umgibt. Die Kompensationsmasse 20 gleicht also einer Ringscheibe, die außen eine umlaufende Aussparung aufweist, in welcher das Federelement 25 angeordnet ist.

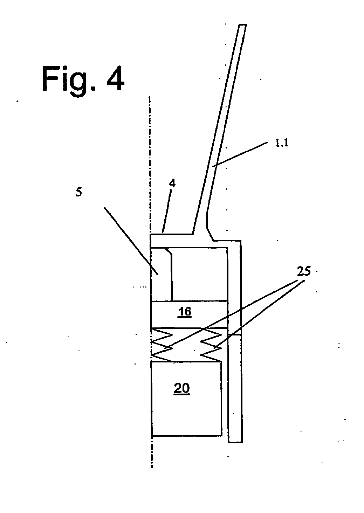

In der Fig. 4 ist eine Hälfte der Messvorrichtung zu sehen (die Symmetrieachse ist eingezeichnet). Auf der Membran 4 ist ein Schwingstab 1.1 der mechanisch schwingfähigen Einheit 1 angebracht. Die Anrege-/Empfangseinheit 5, bei der es sich hier um einen Stapel von piezoelektrischen Elementen handelt, ist zwischen der Membran 4 und der Abstützung 16 eingespannt. Wirken von der mechanisch schwingfähigen Einheit 1 axiale Kraftkomponenten auf das Gehäuse 15, so werden diese über das Gehäuse 15, über die Abstützung 16 und über die Federelemente 25 auf die Kompensationsmasse 20 übertragen, die diese Kraftkomponenten durch entgegengesetzte Schwingungen kompensiert. In dieser Ausgestaltung ist die Kompensationsmasse 20 also hinter der Anrege-/Empfangseinheit 5 angeordnet. Diese Ausgestaltung zeigt auch sehr eindringlich, dass die Kompensationsmasse 20 in axialer Richtung, also in Richtung der Symmetrie- oder Längsachse und somit senkrecht zur Schwingungsachse der mechanisch schwingfähigen Einheit 1 schwingt.

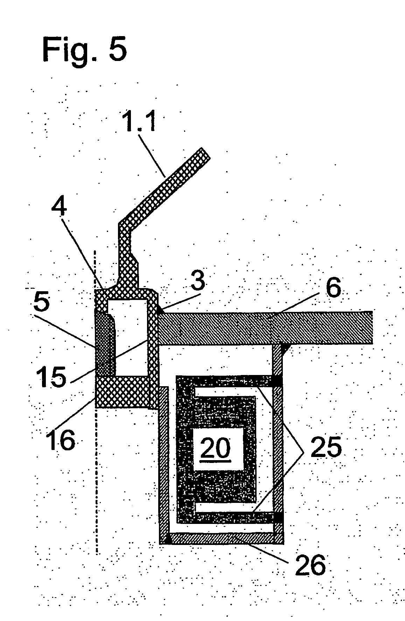

Die Fig. 5 zeigt einen von zwei Schwingstäben 1.1, welche an der Membran 4 angebracht sind. Der Schwingstab 1.1, welcher vorzugsweise mit der Resonanzfrequenz schwingt, ist hier um 45° gegenüber der Normalen geneigt. Entsprechendes gilt für den zweiten, hier nicht gezeigten Schwingstab der Schwinggabel. Die Darstellung ist bei der Fig. 5 - wie bei den anderen Abbildungen auch - nicht maßstäblich. Die Einspannung 3 für das Gehäuse 15, an welchem sich die Membran 4 befindet, und welche zumindest die Anrege-/Empfangseinheit 5 umfasst, befindet sich hier an einem Flansch 6. Die aus der 45°-Neigung resultierenden axialen Kräfte der Schwingungen der Schwingstäbe 1.1 werden durch die Kompensationsmasse 20 kompensiert, welche sich in einem Umfassungsgehäuse 26 befindet und welche das Gehäuse 15 des Vibrationssensors zumindest teilweise radial umgibt. Das Umfassungsgehäuse 26 wiederum ist am Gehäuse 15 und am Flansch 6 fixiert. Diese Ausgestaltung erlaubt es, einen im Stand der Technik bekannten Vibrationssensor zu verwenden und ihn zusätzlich mit der Kompensationsmasse 20 auszustatten, d.h. ihn quasi für den Fall der Neigung der Schwingstäbe 1.1 nachzurüsten. Hierfür lässt sich das Umfassungsgehäuse 26 anschweißen oder zumindest über Schrauben kraftschlüssig mit dem Flansch 6 und dem Gehäuse 15 verbinden. Die Kompensationsmasse 20 selbst ist in dem Umfassungsgehäuse 26 über zwei Federn 25 aufgehängt, welche auch der Kraftübertragung dienen. Die Kompensationsmasse 20 und das Arbeiten der schwingfähigen Einheit 1 in der Resonanz führen dazu, dass für die Aufrechterhaltung der Schwingungen eine sehr geringe Energiezufuhr ausreichend ist.

## Patentansprüche

1. Vorrichtung zur Bestimmung und/oder Überwachung mindestens einer Prozessgröße eines Mediums,
mit einer mechanisch schwingfähigen Einheit (1), welche in mindestens einer Richtung mechanische Schwingungen ausführt, und welche an einer Einspannung (3) befestigt ist,
mit einer Anrege-/Empfangseinheit (5), welche die mechanisch schwingfähige Einheit (1) zu mechanischen Schwingungen anregt, und welche die mechanischen Schwingungen der mechanisch schwingfähigen Einheit (1) empfängt,
und mit einer Regel-/Auswerteeinheit, welche die mechanischen Schwingungen der mechanisch schwingfähigen Einheit (1) regelt, und welche mit den mechanischen Schwingungen der mechanisch schwingfähigen Einheit (1) die Prozessgröße bestimmt und/oder überwacht,
**dadurch gekennzeichnet,**
**dass** mindestens eine Kompensationsmasse (20) vorgesehen ist,
welche mit der mechanisch schwingfähigen Einheit (1) mechanisch gekoppelt ist,
und welche derartig ausgestaltet und/oder befestigt ist, dass sie mindestens mechanische Schwingungen in einer Richtung ausführt,
wobei die Richtung der Schwingungen der Kompensationsmasse (20) im Wesentlichen senkrecht auf der Richtung der Schwingungen der mechanisch schwingfähigen Einheit (1) steht, so dass die in Richtung der senkrecht zur Schwingungsrichtung der mechanisch schwingenden Einheit (1) wirkenden Reaktionskräfte durch die in dieser Richtung schwingende Kompensationsmasse (20) ausgeglichen werden.

2. Vorrichtung nach Anspruch 1, **dadurch gekennzeichnet, dass** die mechanisch schwingfähige Einheit (1) derartig ausgestaltet und/oder befestigt ist, dass sie mechanische Schwingungen im Wesentlichen senkrecht zu einer ihrer Längsachsen (2) ausführt, und dass die Kompensationsmasse (20) derartig ausgestaltet und/oder befestigt ist, dass sie mindestens axiale Schwingungen parallel zur Längsachse (2) der mechanisch schwingfähigen Einheit (1) ausführt.

3. Vorrichtung nach Anspruch 1, **dadurch gekennzeichnet, dass** die Kompensationsmasse (20) derartig ausgestaltet und/oder befestigt ist, dass von der mechanisch schwingfähigen Einheit (1) auf die Einspannung (3) wirkende Reaktionskräfte kompensiert werden.

4. Vorrichtung nach Anspruch 1, **dadurch gekennzeichnet, dass** die mechanisch schwingfähige Einheit (1) an mindestens einer Membran (4) befestigt ist.

5. Vorrichtung nach Anspruch 4, **dadurch gekennzeichnet, dass** die Anrege-/Empfangseinheit (5) an der Membran (4) befestigt ist.

6. Vorrichtung nach Anspruch 1, **dadurch gekennzeichnet, dass** mindestens ein Gehäuse (15) vorgesehen ist, dass die mechanisch schwingfähige Einheit (1) mit dem Gehäuse (15) verbunden ist, und dass die Kompensationsmasse (20) mit dem Gehäuse (15) verbunden ist.

7. Vorrichtung nach Anspruch 1, **dadurch gekennzeichnet, dass** die Kompensationsmasse (20) über mindestens ein Federelement (25) mit der mechanisch schwingfähigen Einheit (1) mechanisch gekoppelt ist.

8. Vorrichtung nach Anspruch 1, **dadurch gekennzeichnet, dass** die Anrege-/Empfangseinheit (5) mindestens ein piezoelektrisches Element aufweist.

9. Vorrichtung nach Anspruch 1 oder 8, **dadurch gekennzeichnet, dass** die Kompensationsmasse (20) mindestens eine Innenaussparung (21) aufweist, welche die Anrege-/Empfangseinheit (5) umgibt.

10. Vorrichtung nach Anspruch 1, **dadurch gekennzeichnet, dass** es sich bei der mechanisch schwingfähigen Einheit (1) um eine Schwinggabel mit zwei voneinander beabstandeten Schwingstäben (1.1) handelt.

## Claims

1. Unit for determining and/or monitoring at least one process variable of a medium,
with a unit (1), which is capable of mechanical vibration, said unit performing mechanical vibrations in at least one direction and being secured to a fixed support (3),
with an exciter/receiver unit (5) that excites the unit (1) that is capable of mechanical vibration to vibrate mechanically, and which receives the mechanical vibrations of the unit (1) that is capable of mechanical vibration,
and with a control/evaluation unit that controls the mechanical vibrations of the unit (1) that is capable of mechanical vibration, and which determines and/or monitors the process variable with the mechanical vibrations of the unit (1) that is capable of mechanical vibration,
**characterized in that**
at least one compensation body (20) is provided, which is mechanically coupled with the unit (1) which is capable of mechanical vibration,
and which is designed and/or secured in such a way that it performs mechanical vibrations, at least, in one direction,
wherein the direction of the vibrations of the compensation body (20) is primarily perpendicular to the direction of the vibrations of the unit (1) which is capable of mechanical vibration, such that the reactive forces acting in the direction perpendicular to the direction of the vibrations of the mechanically vibrating unit (1) are offset by the compensation body (20) vibrating in this direction.

2. Unit as claimed in Claim 1, **characterized in that** the unit (1) that is capable of mechanical vibration is designed and/or secured in such a way that it performs mechanical vibrations primarily perpendicular to one of its longitudinal axes (2) and **in that** the compensation body (20) is designed and/or secured in such a way that it at least performs axial vibrations parallel to the longitudinal axis (2) of the unit (1) that is capable of mechanical vibration.

3. Unit as claimed in Claim 1, **characterized in that** the compensation body (20) is designed and/or secured in such a way that reactive forces coming from the unit (1) that is capable of mechanical vibration and acting on the fixed support (3) are compensated.

4. Unit as claimed in Claim 1, **characterized in that** the unit (1) that is capable of mechanical vibration is secured to at least one membrane (4).

5. Unit as claimed in Claim 4, **characterized in that** the exciter/receiver unit (5) is secured to the membrane (4).

6. Unit as claimed in Claim 1, **characterized in that** at least one housing (15) is provided, **in that** the unit (1) that is capable of mechanical vibration is connected to the housing (15), and **in that** the compensation body (20) is connected to the housing (15).

7. Unit as claimed in Claim 1, **characterized in that** the compensation body is mechanically coupled to the unit (1) that is capable of mechanical vibration via at least one spring element (25).

8. Unit as claimed in Claim 1, **characterized in that** the exciter/receiver unit (5) has at least one piezoelectric element.

9. Unit as claimed in Claim 1 or 8, **characterized in that** the compensation body (20) has at least one internal cavity (21) which surrounds the exciter/receiver unit (5).

10. Unit as claimed in Claim 1, **characterized in that** the unit (1) that is capable of mechanical vibration is a tuning fork with two vibrating rods (1.1) located at a distance from one another.

## Revendications

1. Dispositif destiné à la détermination et/ou la surveillance d'une grandeur process d'un produit,
avec une unité apte à vibrer mécaniquement (1), laquelle exécute des vibrations mécaniques dans au moins une direction, et laquelle est fixée sur un dispositif de serrage (3),
avec une unité d'excitation / de réception (5), laquelle excite en vibrations mécaniques l'unité apte à vibrer mécaniquement (1), et laquelle reçoit les vibrations mécaniques de l'unité apte à vibrer mécaniquement (1),
et avec une unité de régulation / d'exploitation, laquelle régule les vibrations mécaniques de l'unité apte à vibrer mécaniquement (1) et laquelle détermine et/ou surveille la grandeur process à l'aide des vibrations mécaniques de l'unité apte à vibrer mécaniquement (1),
**caractérisé en ce**
**qu'**est prévue au moins une masse de compensation (20), laquelle est couplée mécaniquement avec l'unité apte à vibrer mécaniquement (1),
et laquelle est conçue et/ou fixée de telle manière à ce qu'elle exécute au moins des vibrations mécaniques dans une direction,
la direction des vibrations de la masse de compensation (20) étant pour l'essentiel perpendiculaire à la direction des vibrations de l'unité apte à vibrer mécaniquement (1), si bien que les forces de réaction agissant dans la direction perpendiculaire à la direction des vibrations de l'unité apte à vibrer mécaniquement (1) sont compensées par la masse de compensation (20) vibrant dans cette direction.

2. Dispositif selon la revendication 1, **caractérisé en ce que** l'unité apte à vibrer mécaniquement (1) est conçue et/ou fixée de telle manière à ce qu'elle exécute des vibrations mécaniques pour l'essentiel perpendiculaires à l'un de ses axes longitudinaux (2), et **en ce que** la masse de compensation (20) est conçue et/ou fixée de telle manière à ce qu'elle exécute au minimum des vibrations axiales, parallèles à l'axe longitudinal (2) de l'unité apte à vibrer mécaniquement (1).

3. Dispositif selon la revendication 1, **caractérisé en ce que** la masse de compensation (20) est conçue et/ou fixée de telle manière que les forces de réaction de l'unité apte à vibrer mécaniquement (1) agissant sur le dispositif de fixation (3) sont compensées.

4. Dispositif selon la revendication 1, **caractérisé en ce que** l'unité apte à vibrer mécaniquement (1) est fixée à au moins une membrane (4).

5. Dispositif selon la revendication 4, **caractérisé en ce que** l'unité d'excitation / de réception (5) est fixée à la membrane (4).

6. Dispositif selon la revendication 1, **caractérisé en ce qu'**est prévu au moins un boîtier (15), **en ce que** l'unité apte à vibrer mécaniquement (1) est reliée avec le boîtier (15), et **en ce que** la masse de compensation (20) est reliée avec le boîtier (15).

7. Dispositif selon la revendication 1, **caractérisé en ce que** la masse de compensation (20) est couplée mécaniquement avec l'unité apte à vibrer mécaniquement (1) par l'intermédiaire d'au moins un élément élastique (25).

8. Dispositif selon la revendication 1, **caractérisé en ce que** l'unité d'excitation / de réception (5) comporte au minimum un élément piézoélectrique.

9. Dispositif selon la revendication 1 ou 8, **caractérisé en ce que** la masse de compensation (20) présente au minimum un logement intérieur (21), lequel entoure l'unité d'excitation / de réception (5).

10. Dispositif selon la revendication 1, **caractérisé en ce que**, concernant l'unité apte à vibrer mécaniquement (1), il s'agit d'une fourchette vibrante composée de deux tiges vibrantes (1, 1) espacées.
